# EUROPÄISCHE PATENTSCHRIFT

(11) **EP 2 976 524 B1**
(45) Veröffentlichungstag und Bekanntmachung des Hinweises auf die Patenterteilung: **27.05.2020**
(21) Anmeldenummer: 14709191.2
(22) Anmeldetag: 06.03.2014
(51) Int. Cl.: F03D 1/06

(54) **ROTORBLATT EINER WINDENERGIEANLAGE, WINDENERGIEANLAGE UND VERFAHREN ZUM BETREIBEN EINER WINDENERGIEANLAGE**
ROTOR BLADE OF A WIND POWER PLANT, WIND POWER PLANT AND METHOD FOR OPERATING A WIND POWER PLANT
PALE DE ROTOR D'UNE ÉOLIENNE, ÉOLIENNE, ET PROCÉDÉ POUR FAIRE FONCTIONNER UNE ÉOLIENNE

(30) Priorität: 20.03.2013 DE 102013204879
(43) Veröffentlichungstag der Anmeldung: 27.01.2016
(73) Patentinhaber: Senvion Deutschland GmbH, 22297 Hamburg (DE)
(72) Erfinder: ERBSLÖH, Sascha, 24784 Westerrönfeld (DE)
(74) Vertreter: Wallinger Ricker Schlotter Tostmann
(86) Internationale Anmeldenummer: PCT/EP2014/000578
(87) Internationale Veröffentlichungsnummer: WO 2014/146756

(56) Entgegenhaltungen:
- US-A- 5 088 665
- US-A1- 2003 091 436
- US-A1- 2011 110 777
- US-A1- 2011 142 595
- US-A1- 2011 223 033

## Beschreibung

Die Erfindung betrifft ein Rotorblatt einer Windenergieanlage mit einer Längserstreckung, die sich von einer Rotorblattwurzel zu einer Rotorblattspitze erstreckt, wobei das Rotorblatt wenigstens in einem Bereich seiner Längserstreckung ein aerodynamisches Querschnittsprofil aufweist, das eine Profilvorderkante und eine Profilhinterkante aufweist, die über eine Saugseite und eine Druckseite des Querschnittsprofils verbunden sind. Die Erfindung betrifft ferner ein Verfahren zum Betreiben einer Windenergieanlage mit wenigstens einem entsprechenden Rotorblatt, ein Betriebsführungssystem einer Windenergieanlage und eine Windenergieanlage mit wenigstens einem entsprechenden Rotorblatt.

Moderne Windenergieanlagen mit zwei oder mehr Rotorblättern werden im Bereich größerer Windgeschwindigkeiten zur Lastbegrenzung mit veränderlichen Blatteinstellwinkeln, auch Pitchwinkel genannt, betrieben. Durch eine Vergrößerung der Betriebsgröße

Blatteinstellwinkel wird der aerodynamische Anstellwinkel bei höheren Windgeschwindigkeiten verkleinert, um den Auftrieb und die entnommene Leistung zu reduzieren. Dabei ist der Anstellwinkel der Winkel zwischen der Anströmrichtung des Windes und der Sehne, also der Verbindungslinie zwischen der Vorderkante und der Hinterkante des aerodynamischen Rotorblattprofils. Im Rahmen der vorliegenden technischen Lehre ist der Zusammenhang zwischen Rotorblatteinstellwinkel und Anstellwinkel wie üblich so definiert, dass eine Erhöhung des Blatteinstellwinkels zu einer Verkleinerung des Anstellwinkels führt. Der Anstellwinkel kann auch negativ werden.

Rotorblätter von Windenergieanlagen weisen außerdem einen sogenannten Twist bzw. eine Verwindung auf, sind also entlang ihrer Längserstreckung so verwunden, dass die Sehne, also die Verbindungslinie zwischen Profilvorderkante und Profilhinterkante im Verlauf der Längserstreckung des Rotorblatts von der Blattwurzel zur Blattspitze hin rotiert wird. Die durch die Sehne aufgespannte Fläche entlang der Längserstreckung des Rotorblatts bildet somit eine Art verzerrte Schraubenfläche derart, dass der aerodynamische Anstellwinkel an der Blattspitze kleiner ist als an der Blattwurzel. Dadurch wird erreicht, dass das Rotorblatt bei kleinen und mittelgroßen Windgeschwindigkeiten, bei denen noch keine Blattverstellung erfolgt, mit der Rotorblattspitze im Mittel mit einem optimalen Anstellwinkel betrieben wird und hier die größte Leistung entnommen wird. Die in Bezug auf die Rotorfläche inneren Teile des Rotorblatts, also die blatwurzelnahen Bereiche, tragen hierzu weniger bei. In diesem Betriebsmodus beträgt der Blatteinstellwinkel vorliegend definitionsgemäß 0°. Ferner kann hier das Rotorblatt in eine windabgewandte Ruheposition, die sogenannte Fahnenstellung, verschwenkt werden, die in etwa einer 90°-Stellung des Blatteinstellwinkels nach der vorliegenden Definition entspricht.

Zur Steigerung des Jahresenergieertrags der Windenergieanlagen werden moderne Rotorblätter immer größer dimensioniert. Für den Offshore-Betrieb ist dazu noch eine hohe Abschaltgeschwindigkeit wirtschaftlich sinnvoll. Diese Kombination führt, vor allem bei geringer Flächenbelastung des Rotors dazu, dass die Windenergieanlage bei hohen Windgeschwindigkeiten und sehr hohen positiven Pitchwinkeln, beispielsweise größer als 30°, betrieben werden muss. Bei solch hohen positiven Pitchwinkeln ist der Anstellwinkel im Bereich der Rotorblattspitze bereits weit im negativen Bereich, so dass dem Wind vermehrt nur im inneren Bereich des Rotors Energie entzogen wird. Die zunehmend negativeren Anstellwinkel im Blattspitzenbereich können den negativen Stallwinkel αₛₙ unterschreiten. Es findet dann eine Ablösung der Luftströmung auf der Druckseite des Profils statt und der Widerstandskoeffizient C_{D} steigt schlagartig an. Der hohe negative Gradient dC_{D}/d_{α} geht mit einer plötzlichen Verringerung der Dämpfung in Edge-Richtung einher und ist eine dimensionierende, also einschränkende, negative Edge-Extremlast.

Im Betrieb führen verschiedene Faktoren zu teilweise schnellen und extremen Änderungen des Anstellwinkels. Neben Verstellvorgängen des Pitchwinkels sind dies vor allem Windböen und Turbulenzen im Windfeld sowie beispielsweise der Effekt des Turmstaus. Auch solche Variationen sind bei der Auslegung von Rotorblättern zu berücksichtigen. Zur Vermeidung strukturschädigender Ereignisse kann derzeit nur die Blattstruktur verstärkt oder die Abschaltgeschwindigkeit verringert werden. Dies führt einerseits zu höheren Blattkosten und andererseits zu verringertem Ertrag.

US 2003/0091436 A1 betrifft eine Vorrichtung zur Regulierung eines Luftstroms um ein Rotorblatt einer Windenergieanlage mit einem auf der Saugseite des Rotorblatts in Verbindung mit einer anderen flussregulierenden Einheit angeordneten Spoiler, der mit einem Hohlraum ausgestattet ist.

US 5,088,665 A offenbart eine gezackte Struktur an einer scharfen Profilhinterkante mit flächigen Körpern, die den Drag einer aerodynamischen Struktur vermindert.

US 2011/0110777 A1 offenbart eine aktive Flusssteuerungsvorrichtung mit beweglichen Vortexgeneratoren, die oszillierend hin- und hergedreht werden können. In US 2011/0223033 A1 ist eine Windenergieanlage offenbart, bei der im mittleren Rotorblattbereich bis hin zur Rotorblattspitze Spoiler ausfahrbar an der Saugseite angeordnet sind. Ferner betrifft US 2011 /0142595 A1 ein Rotorblatt einer Windenergieanlage, an dessen Saugseite ebenfalls mehrere Vor- texgeneratoren ausfahrbar angeordnet sind.

Der Erfindung liegt demgegenüber die Aufgabe zugrunde, einen lastenreduzierten Betrieb bei hohen Windgeschwindigkeiten und gleichbleibend hohem Ertrag zu ermöglichen.

Diese Aufgabe wird durch ein Rotorblatt einer Windenergieanlage nach Anspruch 1 gelöst.

Die Auftriebsreduktionsvorrichtung im blattwurzelnahen Bereich an der Saugseite senkt den Auftrieb und somit die Induktion bzw. Leistungsentnahme in der inneren Hälfte des Rotorblatts. Dies ermöglicht es, die anfallenden großen Blatteinstellwinkel oder Pitchwinkel zu verringern und ermöglicht einen lastenreduzierten Betrieb bei hohen Windgeschwindigkeiten, der keine dimensionierenden Edge-Lasten mehr hervorbringt.

Die Auftriebsreduktionsvorrichtung ist bewegbar und kann im normalen Betrieb, also wenn die extremen Edge-Lasten nicht auftreten, in einer auftriebsneutralen Position gehalten werden, in der der reguläre Fluss der Luftströmung nicht gestört wird und das Rotorblatt seine übliche designgemäße Aerodynamik hat. Bei den genannten Extrembedingungen, in denen üblicherweise abgeschaltet werden müsste, um die Rotorblätter insbesondere an den Blattspitzen nicht zu überlasten, wird die Auftriebsreduktionsvorrichtung in die auftriebsreduzierende Betriebsposition bewegt, in der die Strömung im Bereich der Auftriebsreduktionsvorrichtung gestört wird.

Idealerweise erfolgt in dem blattwurzelnahen Bereich eine Ablösung der Strömung vom Saugseitenprofil. Dies verringert den Auftrieb und somit die Leistungsentnahme im blattwurzelnahen Bereich. Der Blatteinstellwinkel kann verringert und damit der Anstellwinkel vergrößert werden. Dies bedeutet auch, dass im Bereich der Rotorblattspitze der Anstellwinkel von dem negativen Stallwinkel αₛₙ entfernt wird, so dass die negative Edge-Extremlast nicht mehr auftreten kann. Gleichzeitig verlagert sich die Leistungsentnahme aus dem rotorblattwurzelnahen Bereich in einen weiter außen gelegenen Bereich. Somit ist es auch nicht mehr notwendig, die Rotorblätter in ihrer Blattstruktur zu verstärken. Auch die Abschaltgeschwindigkeit muss nicht verringert werden.

Vorzugsweise ist die Auftriebsreduktionsvorrichtung als schwenkbare oder ausfahrbare Klappe oder als Reihe von zwei oder mehr unabhängig voreinander schwenkbaren oder ausfahrbaren Klappen ausgebildet, die insbesondere aus Faserverbundmaterialien hergestellt ist oder sind. Eine solche Klappe wird im Rahmen der vorliegenden Erfindung auch als "Stall-Flap" bezeichnet. Dies kann eine kleine auslenkbare Klappe sein, die auf der Saugseite der Wurzelprofile angebracht ist und vorteilhafterweise aus faserverbundenen Materialien hergestellt ist. Dies stellt eine besonders einfache und leichte Ausführungsform der Erfindung dar. Wenn die Klappe unterteilt ist oder zwei oder mehr unabhängig voneinander schwenkbare oder ausfahrbare Klappen aufweist, kann die Auftriebsreduktion sehr genau gesteuert werden.

Vorteilhafterweise ist die Auftriebsreduktionsvorrichtung über eine Drehachse mit Führungselementen auf eine Oberfläche der Saugseite verklebt, wobei die Auftriebsreduktionsvorrichtung insbesondere über die Drehachse mittels eines Aktuators oder eines mechanischen Systems bewegbar ist, der oder das insbesondere an der Rotorblattwurzel angeordnet ist. So kann die beispielsweise als Klappe ausgeführte Auftriebsreduktionsvorrichtung über eine Drehachse mit Führungselementen auf die Oberfläche verklebt sein. Die Drehachse führt dann über weitere Führungselemente zur Blattwurzel, wo der Aktuator oder ein entsprechendes mechanisches System positioniert ist.

Eine besonders günstige Anordnung der Auftriebsreduktionsvorrichtung ergibt sich, wenn die Auftriebsreduktionsvorrichtung sich von 5% bis 65%, insbesondere von 10% bis 50%, insbesondere von 12% bis 30%, des Blattradius erstreckt und/oder in Sehnenrichtung des Querschnittsprofils von der Vorderkante gemessen zwischen 15% und 100%, insbesondere zwischen 15% bis 60% oder 50% bis 100%, der Sehne angeordnet ist. Dabei ist in Sehnenrichtung die Position der Auftriebsreduktionsvorrichtung von 15% bis 60% besonders vorteilhaft, gegebenenfalls aber auch aus Gründen der Systemimplementierung zwischen 50% bis 100% vorzuziehen.

In einer bevorzugten Ausführungsform ist die Auftriebsreduktionsvorrichtung in Strömungsrichtung hinter, insbesondere einer Reihe von, Vortexgeneratoren angeordnet, die insbesondere die gleiche oder eine größere Längserstreckung am Rotorblatt aufweisen wie oder als die Auftriebsreduktionsvorrichtung. Die Positionierung der Auftriebsreduktionsvorrichtung hinter den Vortexgeneratoren ist besonders günstig. Hierdurch werden eventuelle negative aerodynamische Einflüsse der Auftriebsreduktionsvorrichtung auch in der auftriebsneutralen Position vermieden.

Das aerodynamische Querschnittsprofil weist, insbesondere im Bereich der Auftriebsreduktionsvorrichtung, vorzugsweise eine relative Dicke (t/c) von 29% und mehr, insbesondere von 32% oder mehr, auf. Dabei sind t ("thickness") und c ("chord") die Ausdehnungen quer zur Sehne und in Sehnenrichtung zwischen Vorderkante und Hinterkante. Die zuvor beschriebenen Ausmaße der Auftriebsreduktionsvorrichtung beziehen sich ebenfalls vorzugsweise auf Profile mit einer relativen Dicke (t/c) von mehr als 29% oder mehr als 30%.

Das aerodynamische Querschnittsprofil weist einen Bereich mit einer stumpfen Hinterkante auf. Dabei ist die Auftriebsreduktionsvorrichtung wenigstens teilweise in dem Bereich mit der stumpfen Hinterkante angeordnet.

Erfindungsgemäß ist wenigstens in einem Bereich der stumpfen Hinterkante eine Druckwiderstandsreduktionsvorrichtung angeordnet, deren Länge im Wesentlichen gleich der halben bis ganzen Höhe der stumpfen Hinterkante ist, wobei die Druckwiderstandsreduktionsvorrichtung in einer Ausführung als Platte, insbesondere aus einem GFK-Schaum-Sandwich-Material, ausgebildet ist, die fest, insbesondere über einen T-Fuß, mit der stumpfen Hinterkante des Profils verbunden ist oder reversibel aus einer neutralen Position in eine Betätigungsposition bewegbar ist.

Eine solche auch als "Splitter-Platte" oder "Splitter-Plate" bezeichnete Druckwiderstandsreduktionsvorrichtung an der stumpfen Hinterkante sorgt dafür, dass der Druckwiderstand von Profilen mit stumpfer Hinterkante verringert wird, da die Luftströmung an der Hinterkante besser von der Hinterkante weggelenkt wird. Die Größe der Druckwiderstandsreduktionsvorrichtung ist vorzugsweise von der gleichen Größenordnung der Hinterkante. Die Länge des Splitter-Plate" bzw. der Druckwiderstandsreduktionsvorrichtung ist somit gleich oder ähnlich zur Höhe der Hinterkante, zwischen der halben und der ganzen Hinterkante. Dies ist auch eine Konsequenz daraus, dass die Höhe der Hinterkante eine Funktion des Radius ist, was auch für die Länge der Druckwiderstandsreduktionsvorrichtung gilt.

Die Dicke der Druckwiderstandsreduktionsvorrichtung ist aus aerodynamischer Sicht nicht kritisch, so dass sie aus rein strukturellen Anforderungen dimensioniert werden kann. Eine nicht metallische Bauweise aus einem GFK-Schaum-Sandwich und einer Klebeverbindung über einen T-Fuß an der Hinterkante des Profils ist vorteilhaft. Auch eine Bewegbarkeit kann zur Betriebsführung der Windenergieanlage vorteilhaft eingesetzt werden.

Das erfinderische Konzept besteht in seiner simpelsten Ausführungsform somit aus simplen nicht-metallischen Anbauteilen, welche auf die bestehende Blattstruktur geklebt werden können. Natürlich sind auch andere Ausführungsformen in dieser Hinsicht anwendbar. Besonders in Kombination mit Vortexgeneratoren hat eine damit einhergehende Beeinträchtigung der aerodynamischen Oberfläche nur eine relativ geringe Auswirkung. Die Auftriebsreduktionsvorrichtung kann entweder aktiv durch einen Aktuator, gegebenenfalls mit entsprechendem Regler, an der Blattwurzel angesteuert werden oder durch ein rein mechanisches System, das eine Funktion des Blatteinstellwinkels ist. Eine solche Anordnung hat dann auch keine negativen Auswirkungen beispielsweise auf das Blitzschutzsystem. Eine eventuelle Beeinträchtigung des Rotorschallleistungspegels ist angesichts der hohen Windgeschwindigkeiten, bei denen die Auftriebsreduktionsvorrichtung aktiviert wird, üblicherweise nicht kritisch.

Die der Erfindung zugrunde liegende Aufgabe wird auch durch ein Verfahren zum Betreiben einer Windenergieanlage mit wenigstens einem zuvor beschriebenen erfindungsgemäßen Rotorblatt gelöst, wobei eine Auftriebsreduktion im blattwurzelnahen Bereich des Rotorblatts durch Bewegen der Auftriebsreduktionsvorrichtung in eine auftriebsreduzierende Betriebsposition bei hohen Windgeschwindigkeiten und/oder großen Blatteinstellwinkeln vorgenommen wird, wobei zusätzlich der Blatteinstellwinkel gegenüber dem auftriebsneutralen Betrieb reduziert wird. Damit wird erreicht, dass bei hohen Windgeschwindigkeiten und großen positiven Blatteinstellwinkeln die Auftriebsreduktionsvorrichtung, insbesondere ein Stall-Flap, ausgelenkt wird und dadurch im Blattwurzelbereich eine signifikante Verringerung des Auftriebs und der Induktion, also Leistungsentnahme, verursacht wird. Dies hat zur Folge, dass kleinere Blatteinstellwinkel eingestellt werden können, da jetzt eine erhöhte Induktion im Blattspitzenbereich benötigt wird und demnach ein größerer Anstellwinkel. Dies verhindert dann negativen Stall und verringert die Dimensionierung der Edge-Extremlasten.

Vorzugsweise wird die Auftriebsreduktion vorgenommen, bevor die Windenergieanlage in Bezug auf die Windgeschwindigkeit und/oder Rotorblatteinstellwinkel in einen Betriebsbereich gelangt, in dem in einem Bereich der Rotorblattspitze ein Strömungsabriss an der Druckseite zu erwarten ist. Dieser Strömungsabriss führt zu den sogenannten Edge-Extremlasten und kann beispielsweise in der Designphase des Rotorblatts simuliert werden.

Eine besonders flexible Steuerung wird ermöglicht, wenn vorzugsweise die Auftriebsreduktionsvorrichtung in Abhängigkeit der Windgeschwindigkeit und/oder des Rotorblatteinstellwinkels in abgestufte oder stufenlose Zwischenpositionen zwischen der auftriebsneutralen Position und einer maximal auftriebsreduzierenden Betriebsposition bewegt wird und/oder, ausgehend von einem blattwurzelnächsten Abschnitt oder einer blattwurzelnächsten Klappe, die Anzahl der in einer auftriebsreduzierenden Betriebsposition bewegten Klappen mit steigender Windgeschwindigkeit erhöht wird und/oder der Anstellwinkel um einen windgeschwindigkeitsabhängigen Betrag abgestuft oder stufenlos reduziert wird.

Wenn die herrschende Windgeschwindigkeit weiter steigt, ist vorzugsweise vorgesehen, dass bei Windgeschwindigkeiten oberhalb eines maximalen Windgeschwindigkeitsgrenzwerts, insbesondere einer Abschaltgeschwindigkeit der Windenergieanlage, die Auftriebsreduktionsvorrichtung in die auftriebsneutrale Position bewegt wird, wobei insbesondere das Rotorblatt in eine Fahnenstellung bewegt wird. Damit wird sichergestellt, dass auch bei stillgesetzter Windenergieanlage, bei der die Rotorblätter in Fahnenstellung sind, an den Rotorblättern keine Schäden auftreten, da die auftriebsneutrale Position der Auftriebsreduktionsvorrichtung die geringste Angriffsfläche bietet. Damit ist es auch möglich, den Rotor im Trudelbetrieb in einer gewünschten stillgesetzten Position zu halten.

Die Betätigung der Auftriebsreduktionsvorrichtung wird vorzugsweise dadurch begleitet, dass die Druckwiderstandsreduktionsvorrichtung an der stumpfen Hinterkante des Rotorblattprofils aus einer druckwiderstandsneutralen Position in eine druckwiderstandsreduzierende Betriebsposition bewegt wird, wenn die Auftriebsreduktionsvorrichtung in eine auftriebsreduzierende Betriebsposition bewegt wird und/oder in die druckwiderstandsneutrale Position bewegt wird, wenn die Auftriebsreduktionsvorrichtung in ihre auftriebsneutrale Position bewegt wird.

Die der Erfindung zugrundeliegende Aufgabe wird auch durch ein Betriebsführungssystem einer Windenergieanlage mit wenigstens einem zuvor beschriebenen erfindungsgemäßen Rotorblatt gelöst, wobei das Betriebsführungssystem, insbesondere mittels eines in dem Betriebsführungssystem gespeicherten und/oder geladenen Softwareprogramms mit Programmcodemitteln, ausgebildet und eingerichtet ist, ein zuvor beschriebenes erfindungsgemäßes Verfahren auszuführen.

Schließlich wird die die Erfindung zugrundeliegende Aufgabe auch durch eine Windenergieanlage mit wenigstens einem zuvor beschriebenen erfindungsgemäßen Rotorblatt und einem zuvor beschriebenen erfindungsgemäßen Betriebsführungssystem gelöst.

Die zu den zuvor genannten Erfindungsgegenständen, also dem Rotorblatt, dem Verfahren, dem Betriebsführungssystem und der Windenergieanlage genannten Merkmale, Eigenschaften und Vorteile gelten ohne Einschränkung auch für die jeweils anderen Erfindungsgegenstände, die sich aufeinander beziehen.

Weitere Merkmale der Erfindung werden aus der Beschreibung erfindungsgemäßer Ausführungsformen zusammen mit den Ansprüchen und den beigefügten Zeichnungen ersichtlich. Erfindungsgemäße Ausführungsformen können einzelne Merkmale oder eine Kombination mehrerer Merkmale erfüllen.

Die Erfindung wird nachstehend ohne Beschränkung des allgemeinen Erfindungsgedankens anhand von Ausführungsbeispielen unter Bezugnahme auf die Zeichnungen beschrieben, wobei bezüglich aller im Text nicht näher erläuterten erfindungsgemäßen Einzelheiten ausdrücklich auf die Zeichnungen verwiesen wird. Es zeigen:
- Fig. 1: eine Perspektivdarstellung eines Rotorblatts,
- Fig. 2 a), b): Diagramme des Auftriebskoeffizienten und des Widerstandskoeffizienten eines Rotorblattprofils als Funktion des Anstellwinkels,
- Fig. 3: eine Perspektivdarstellung eines erfindungsgemäßen Rotorblatts,
- Fig. 4: einen Querschnitt durch ein erfindungsgemäßes Rotorblattprofil,
- Fig. 5: einen Querschnitt durch ein weiteres erfindungsgemäßes Rotorblattprofil,
- Fig. 6 a), b): schematische Darstellungen des Strömungsverlaufs um ein erfindungsgemäßes Rotorblattprofil in zwei verschiedenen Betriebszuständen und
- Fig. 7: eine Ansteuerungsfunktion einer erfindungsgemäßen Auftriebsreduktionsvorrichtung.

In den Zeichnungen sind jeweils gleiche oder gleichartige Elemente und/oder Teile mit denselben Bezugsziffern versehen, so dass von einer erneuten Vorstellung jeweils abgesehen wird.

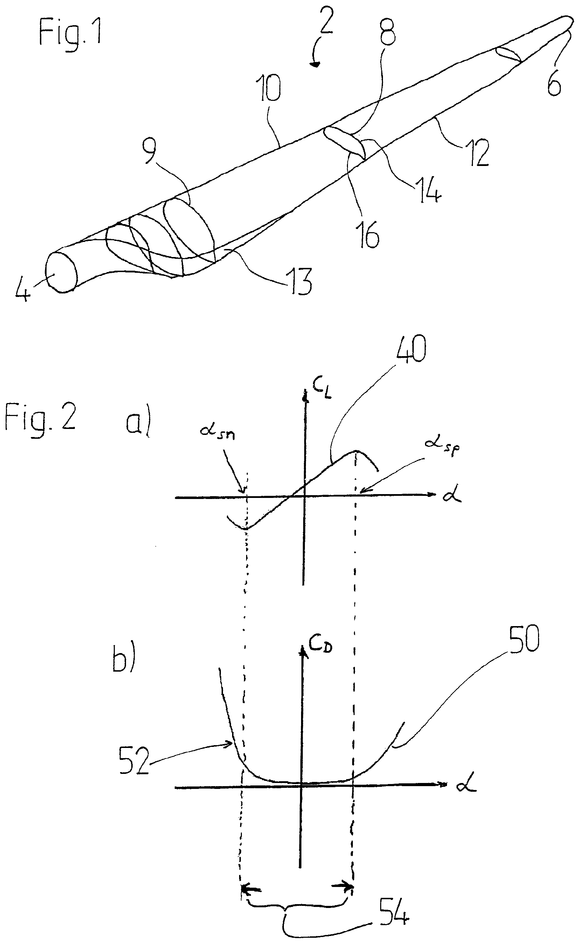

In Fig. 1 ist ein Rotorblatt 2 einer Windenergieanlage in einer perspektivischen Ansicht schematisch dargestellt. Das Rotorblatt 2 weist eine Längserstreckung von einer Rotorblattwurzel 4 mit rundem Querschnitt zu einer Rotorblattspitze 6 auf. Sein Profil weist in seiner Längserstreckung eine Vielzahl von aerodynamischen Querschnittsprofilen 8, 9 auf, von denen einige als Querschnittsformen dargestellt sind. So ist im mittleren Bereich ein aerodynamisches Querschnittsprofil 8 gezeichnet, das sich von einer Profilvorderkante 10 zu einer Profilhinterkante 12 erstreckt und eine Saugseite 14 und eine Druckseite 16 aufweist.

In einem wurzelnäheren Bereich ist die Profilhinterkante 12 abgeschnitten und geht in eine stumpfe Hinterkante 13 über, die sich zur Blattwurzel 4 hin weiter verbreitert und schließlich in den runden Querschnitt der Rotorblattwurzel 4 übergeht. In dem Bereich mit der stumpfen Hinterkante 13 ist ein aerodynamisches Querschnittsprofil 9 gezeigt, das eine größere relative Dicke als das aerodynamische Querschnittsprofil 8 im mittleren Bereich des Rotorblatts aufweist. Ferner sind die nicht dargestellten Sehnen, also die Verbindungslinien zwischen Profilvorderkante 10 und Profilhinterkante 12 im blattwurzelnahen Bereich in einer Ebene angeordnet, die gegenüber der Ebene der Sehnen im blattspitzennahen Bereich verdreht ist.

In Fig. 2 a) ist die Abhängigkeit des Auftriebsbeiwerts C_{L} als Kurve 40 in Abhängigkeit vom Anstellwinkel α dargestellt. Bei einem Anstellwinkel von 0° ergibt sich ein leicht positiver Auftriebsbeiwert. Die Steigung der Kurve 40 ist positiv, so dass bei einer Erhöhung des Anstellwinkels α auch der Auftriebswert C_{L} steigt und bei negativen Anstellwinkeln α der Auftriebsbeiwert C_{L} sinkt und negativ wird.

Bei einem Wert αₛₚ, dem sogenannten positiven Stallwinkel, reißt die Strömung an der Saugseite ab und der Auftriebsbeiwert C_{L} verringert sich wieder. Im Nennbetrieb wird das Rotorblatt bei einem positiven Anstellwinkel α unterhalb des positiven Stallwinkels betrieben. Bei negativen Anstellwinkeln unterhalb eines negativen Stallwinkels αₛₙ reißt die Luftströmung an der Druckseite ab (sogenannte negativer Stall) und der Auftriebsbeiwert C_{L} sinkt betragsmäßig wiederum ab. Somit ergibt sich ein nutzbarer Bereich 54 zwischen dem negativen Stallwinkel αₛₙ und dem positiven Stallwinkel αₛₚ, in dem das Rotorblatt 2 betrieben werden kann.

In Fig. 2 b) ist ebenfalls gegen den Anstellwinkel α der Verlauf des Widerstandskoeffizienten bzw. Widerstandsbeiwerts C_{D} als Kurve 50 dargestellt. Dieser ist in einem weiten Bereich des nutzbaren Bereichs 54 von Anstellwinkel α betragsmäßig klein, steigt jenseits der Stallwinkel αₛₚ und αₛₙ stark an. Insbesondere bei Unterschreiten des negativen Stallwinkels αₛₙ ergibt sich ein extremer negativer Gradient (dC_{D}/dα), der zu extremen Edge-Extremlasten führt. Insbesondere dieser Fall ist bei der Dimensionierung von Rotorblättern zu berücksichtigen.

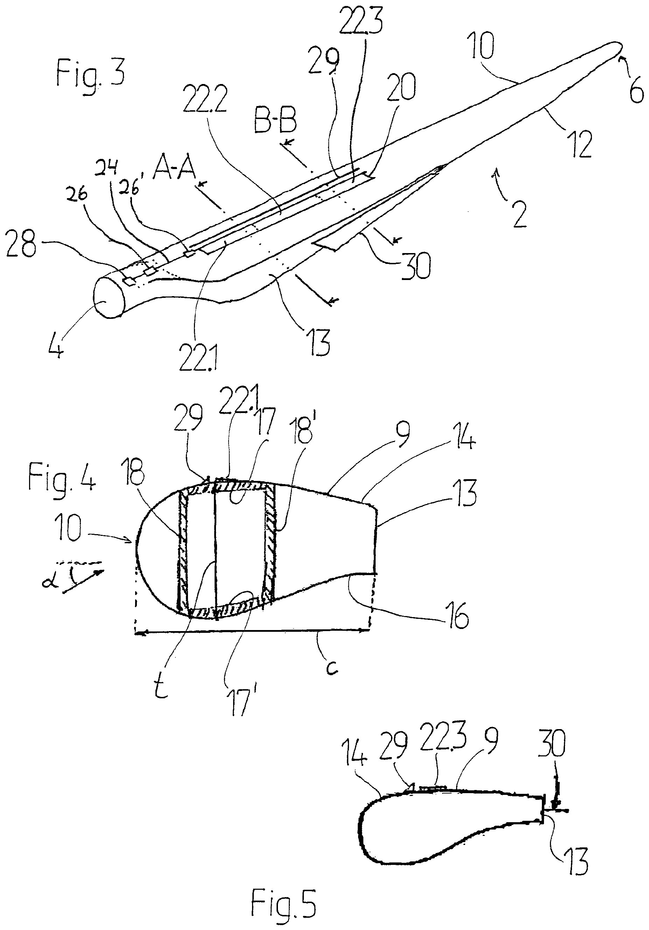

Ein erfindungsgemäßes Rotorblatt 2 ist in Fig. 3 in einer perspektivischen Ansicht schematisch dargestellt. Im Vergleich zu dem Rotorblatt 2 gemäß Fig. 1 ist in Fig. 3 der Bereich mit einer stumpfen Hinterkante noch etwas stärker ausgedehnt. Es handelt sich um ein vergleichsweise langes Rotorblatt, insbesondere für Offshore-Windenergieanlagen.

In der blattwurzelnahen Hälfte, also in einem blattwurzelnahen Bereich, ist eine Auftriebsreduktionsvorrichtung 20 in Form dreier Klappen 22.1 - 22.3, sogenannter "Stall-Flaps", angeordnet, die über eine Drehachse 24 mit einem Aktuator 28, der auf der Rotorblattwurzel 4 angeordnet ist, verbunden sind. Die Drehachse 24 ist mittels zweier Führungselemente 26, 26' auf der Saugseite des Rotorblatts 2 drehbar gelagert und verankert.

Der Auftriebsreduktionsvorrichtung 20 ist eine Reihe von Vortexgeneratoren 29 vorgelagert, die dafür sorgen, dass die Luftströmung bereits verwirbelt wird, bevor sie auf die Klappen 22.1 - 22.3 der Auftriebsreduktionsvorrichtung 20 treffen, so dass diese im Normalbetrieb keinen negativen Einschluss auf die aerodynamischen Eigenschaften des Rotorblatts 2 haben. Anstelle von drei Klappen 22.1 - 22.3 kann auch eine einzelne Klappe verwendet werden.

An der stumpfen Hinterkante 13 ist ferner eine Druckwiderstandsreduktionsvorrichtung 30 in Form einer Splitter-Plate angeordnet, deren Länge in ihrer Größenordnung der Höhe der stumpfen Hinterkante 13 entspricht. Dies bedeutet auch, dass in Richtung von der Blattwurzel 4 ausgehend zur Blattspitze 6 hin die Länge der Druckwiderstandsredukticnsvorrichtung 30 abnimmt.

Die Druckwiderstandsreduktionsvorrichtung 30 ist etwas weiter zur Rotorblattspitze 6 hin angeordnet als die Auftriebsreduktionsvorrichtung 20. Dies hängt damit zusammen, dass sich bei Betätigung der Auftriebsreduktionsvorrichtung 20 und einer anschließenden Verringerung des Rotorblatteinstellwinkels sowie der damit verbundenen Vergrößerung des Anstellwinkels der Bereich des Rotorblatts 2, der dem anströmenden Windfeld Energie entnimmt, von der Rotorblattwurzel 4 in Richtung auf die Rotorblattspitze 6 hin verschiebt. Damit ist der Bereich, in dem die Druckwiderstandsreduktionsvorrichtung 30 angeordnet ist, derjenige Bereich, der besonders an der Leistungsentnahme beteiligt ist und dessen aerodynamisches Querschnittsprofil somit besonders wichtig ist.

Fig. 4 zeigt im schematischen Querschnitt ein aerodynamisches Querschnittsprofil 9 an einer blattwurzelnahen Stelle des Rotorblatts 2, an der das Profil 9 eine stumpfe Hinterkante 13aufweist. Das in Fig. 4 dargestellte Querschnittsprofil 9 entspricht dem Schnitt A-A aus Fig. 3. Im Inneren des Profils 9 sind zwei Gurte 17, 17' und zwei Stege 18, 18' schematisch im Querschnitt dargestellt, die dem Rotorblatt 2 zur Stabilität verhelfen und die Biegemomente, die im Betrieb auf das Rotorblatt einwirken, zur Rotorblattwurzel 4 und zur Rotornabe hin ableiten.

Ebenfalls in Fig. 4 ist die Länge c der nicht dargestellten Blattsehne sowie die Dicke t des Querschnittprofils 9 dargestellt. Im Bereich der Profilvorderkante 10 ist außerdem die Definition des Anstellwinkels α gezeigt, wobei die gestrichelte Linie, die den Winkel α eingrenzt, der Sehnenrichtung entspricht und der Pfeil die Windeinströmrichtung zeigt. Auf der oben dargestellten Saugseite 14 des aerodynamischen Querschnittsprofils 9 sind außerdem Vortexgeneratoren 29 und in Strömungsrichtung direkt dahinter eine Klappe 22 der Auftriebsreduktionsvorrichtung gezeigt, und zwar in einer auftriebsneutralen eingeklappten Position.

Fig. 5 zeigt schematisch den Querschnitt gemäß Schnitt B-B aus Fig. 3, wobei es sich auch in diesem Fall um ein Querschnittsprofil 9 mit einer stumpfen Hinterkante 13 handelt. Da sich dieser Abschnitt allerdings weiter in Richtung der Rotorblattspitze 6 befindet, ist das Profil 9 schlanker gehalten als das Profil 9 aus Fig. 4. Aus Gründen der Übersichtlichkeit sind auch die inneren Strukturen des Rotorblatts nicht dargestellt. Bei den in den Fig. 4 und 5 dargestellten Klappen entsprechend den Schnitten A-A und B-B handelt es sich jeweils um die erste Klappe 22.1 in Fig. 4 und die dritte Klappe 22.3 in Fig. 5.

In Fig. 5 ist an der stumpfen Hinterkante 13 außerdem eine Druckwiderstandsreduktionsvorrichtung 30, eine sogenannte "Splitter-Plate", gezeigt, deren Länge in etwa der Größenordnung der Höhe der stumpfen Hinterkante 30 entspricht.

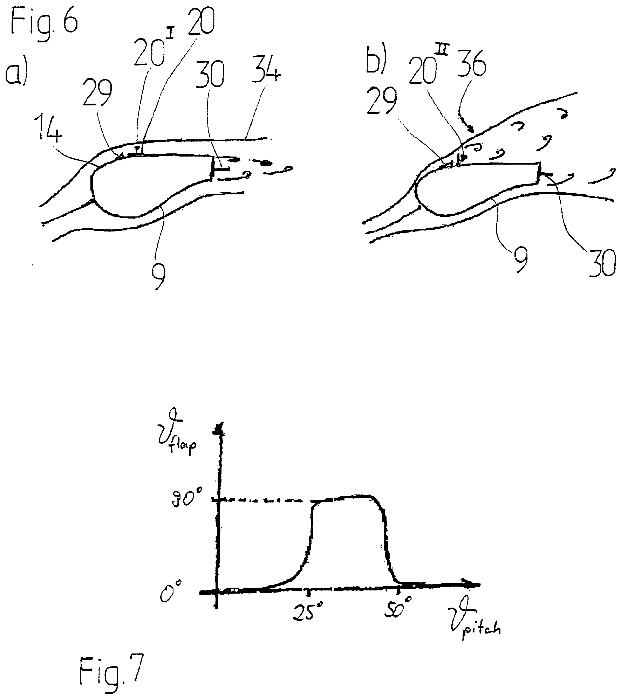

Fig. 6 a) und b) zeigt ein aerodynamisches Querschnittsprofil 9 gemäß den vorstehenden Fig. 3 bis 5, wobei sich die Auftriebsreduktionsvorrichtung in Fig. 6 a) in einer auftriebsneutralen Position 20^{I} befindet und in Fig. 6 b) in einer auftriebsreduzierenden Betriebsposition 20^{II}, in der die Auftriebsreduktionsvorrichtung oder das Stall-Flap um 90° ausgelenkt ist.

Ebenfalls ist der schematische Verlauf der Strömung dargestellt, und zwar in Fig. 6 a) ein das Querschnittsprofil 9 umhüllender vollständig anliegender Strömungsverlauf 34 und in Fig. 6 b) ein Verlauf 36 mit forcierter Strömungsablösung auf der Saugseite bei ausgestelltem Stall-Flap. In diesem Fall entstehen auf der Saugseite und stromabwärts des Querschnittsprofils 9 starke Verwirbelungen.

Schließlich zeigt Fig. 7 diagrammatisch den Verlauf des Auslenkwinkels *ϑ_{flap}* in Abhängigkeit des Blatteinstellwinkels *ϑ_{pitch}.* Dies zeigt, dass beispielsweise die Stall-Flap aus Fig. 6, die in einem Bereich von 0° bis 90° auslenkbar ist, für Blatteinstellwinkel zwischen etwa 25° und 50° ausgefahren wird. Ab etwa 25° oder etwas darunter befindet sich das Rotorblatt in einem Betriebsbereich, in dem negative Edge-Extremlasten zu verhindern sind, so dass in diesem Fall die Steuerung des Stall-Flap in die auftriebsreduzierende 90°-Betriebsposition betrieben wird. Oberhalb von 50° wird die Windenergieanlage stillgesetzt. Hierzu wird die Stall-Flap wieder in die aerodynamisch neutrale 0°-Position verfahren.

Alle genannten Merkmale, auch die den Zeichnungen allein zu entnehmenden sowie auch einzelne Merkmale, die in Kombination mit anderen Merkmalen offenbart sind, werden allein und in Kombination als erfindungswesentlich angesehen. Erfindungsgemäße Ausführungsformen können durch einzelne Merkmale oder eine Kombination mehrerer Merkmale erfüllt sein.

### Bezugszeichenliste

- 2: Rotorblatt
- 4: Rotorblattwurzel
- 6: Rotorblattspitze
- 8, 9: aerodynamisches Querschnittsprofil
- 10: Profilvorderkante
- 12: Profilhinterkante
- 13: stumpfe Hinterkante
- 14: Saugseite
- 16: Druckseite
- 17, 17': Gurt
- 18, 18': Steg
- 20: Auftriebsreduktionsvorrichtung
- 20^{I}: auftriebsneutrale Position
- 20^{II}: auftriebsreduzierende Betriebsposition
- 22: Klappe
- 22.1-22.3: Klappen
- 24: Drehachse
- 26, 26': Führungselement
- 28: Aktuator
- 29: Vortexgeneratoren
- 30: Druckwiderstandsreduktionsvorrichtung
- 34: normaler Strömungsverlauf
- 36: forcierte Strömungsablösung
- 40: Verlauf des Auftriebskoeffizienten C_{L}
- 50: Verlauf des Widerstandskoeffizienten c_{D}
- 52: hoher negativer Gradient
- 54: nutzbarer Bereich des Anstellwinkels α
- C_{L}: Auftriebsbeiwert
- C_{D}: Widerstandskoeffizient
- α: Anstellwinkel
- αₛₙ: negativer Stallwinkel
- αₛₚ: positiver Stallwinkel
- *ϑ_{flap}*: Auslenkwinkel der Auftriebsreduktionsvorrichtung
- *ϑ_{pitch}*: Blatteinstellwinkel

## Patentansprüche

1. Rotorblatt (2) einer Windenergieanlage mit einer Längserstreckung, die sich von einer Rotorblattwurzel (4) zu einer Rotorblattspitze (6) erstreckt, wobei das Rotorblatt (2) wenigstens in einem Bereich seiner Längserstreckung ein aerodynamisches Querschnittsprofil (8 , 9) aufweist, das eine Profilvorderkante (10) und eine Profilhinterkante (12) aufweist, die über eine Saugseite (14) und eine Druckseite (16) des Querschnittsprofils verbunden sind, wobei das aerodynamische Querschnittsprofil (8, 9) einen Bereich mit einer stumpfen Hinterkante (13) aufweist, wobei in einem blattwurzelnahen Bereich wenigstens teilweise in dem Bereich mit der stumpfen Hinterkante (13) an der Saugseite (14) eine Auftriebsreduktionsvorrichtung (20) angeordnet ist, die reversibel zwischen einer auftriebsneutralen Position (20l) ohne Auftriebsreduktion und einer auftriebsreduzierenden Betriebsposition (20ll) bewegbar ist, wobei wenigstens in einem Bereich der stumpfen Hinterkante (13) eine Druckwiderstandsreduktionsvorrichtung (30) angeordnet ist, deren Länge im Wesentlichen gleich der halben bis ganzen Höhe der stumpfen Hinterkante (13) ist.

2. Rotorblatt (2) nach Anspruch 1, **dadurch gekennzeichnet, dass** die eine Auftriebsreduktionsvorrichtung (20) als schwenkbare oder ausfahrbare Klappe oder als Reihe von zwei oder mehr unabhängig voneinander schwenkbaren oder ausfahrbaren Klappen (22.1 - 22.3) ausgebildet ist, die insbesondere aus Faserverbundmaterialien hergestellt ist oder sind.

3. Rotorblatt (2) nach Anspruch 1 oder 2, **dadurch gekennzeichnet, dass** die Auftriebsreduktionsvorrichtung (20) über eine Drehachse (24) mit Führungselementen (26 , 26') auf eine Oberfläche der Saugseite (14) verklebt ist, wobei die Auftriebsreduktionsvorrichtung (20) insbesondere über die Drehachse (24) mittels eines Aktuators (28) oder eines mechanischen Systems bewegbar ist, der oder das insbesondere an der Rotorblattwurzel (4) angeordnet ist.

4. Rotorblatt (2) nach einem der Ansprüche 1 bis 3, **dadurch gekennzeichnet, dass** die Auftriebsreduktionsvorrichtung (20) sich von 5% bis 65%, insbesondere von 10% bis 50%, insbesondere von 12% bis 30%, des Blattradius erstreckt und/oder in Sehnenrichtung des Querschnittsprofils (8, 9) von der Vorderkante (10) gemessen zwischen 15% und 100%, insbesondere zwischen 15% bis 60% oder 50% bis 100%, der Sehne angeordnet ist.

5. Rotorblatt (2) nach einem der Ansprüche 1 bis 4, **dadurch gekennzeichnet, dass** die Auftriebsreduktionsvorrichtung (20) in Strömungsrichtung hinter, insbesondere einer Reihe von, Vortexgeneratoren (29) angeordnet ist, die insbesondere die gleiche oder eine größere Längserstreckung am Rotorblatt (2) aufweisen wie oder als die Auftriebsreduktionsvorrichtung (20).

6. Rotorblatt (2) nach einem der Ansprüche 1 bis 5, **dadurch gekennzeichnet, dass** das aerodynamische Querschnittsprofil (8, 9) eine relative Dicke (t/c) von 29% oder mehr, insbesondere von 32% oder mehr, aufweist.

7. Rotorblatt (2) nach einem der Ansprüche 1 bis 6, **dadurch gekennzeichnet, dass** die Durckwiderstandsreduktionsvorrichtung (30) als Platte, insbesondere aus einem GFK-Schaum-Sandwich-Material, ausgebildet ist.

8. Rotorblatt (2) nach einem der Ansprüche 1 bis 7, **dadurch gekennzeichnet, dass** die Platte über einen T-Fuß fest mit der stumpfen Hinterkante (13) des Profils (9) verbunden oder reversibel aus einer neutralen Position in eine Betätigungsposition bewegbar ist.

9. Verfahren zum Betreiben einer Windenergieanlage mit wenigstens einem Rotorblatt (2) nach einem der Ansprüche 1 bis 8, **dadurch gekennzeichnet, dass** eine Auftriebsreduktion im blattwurzelnahen Bereich des Rotorblatts (2) durch Bewegen der Auftriebsreduktionsvorrichtung (20) in eine auftriebsreduzierende Betriebsposition (20ll) bei hohen Windgeschwindigkeiten und/oder großen Blatteinstellwinkeln vorgenommen wird, wobei zusätzlich der Blatteinstellwinkel gegenüber dem auftriebsneutralen Betrieb reduziert wird.

10. Verfahren nach Anspruch 9, **dadurch gekennzeichnet, dass** die Auftriebsreduktion vorgenommen wird, bevor die Windenergieanlage in Bezug auf die Windgeschwindigkeit und/oder Rotorblatteinstellwinkel in einen Betriebsbereich gelangt, in dem in einem Bereich der Rotorblattspitze (6) ein Strömungsabriss an der Druckseite zu erwarten ist.

11. Verfahren nach Anspruch 9 oder 10, **dadurch gekennzeichnet, dass** die Auftriebsreduktionsvorrichtung (20) in Abhängigkeit der Windgeschwindigkeit und/oder des Rotorblatteinstellwinkels in abgestufte oder stufenlose Zwischenpositionen zwischen der auftriebsneutralen Position (20I) und einer maximal auftriebsreduzierenden Betriebsposition (20II) bewegt wird und/oder, ausgehend von einem blattwurzelnächsten Abschnitt oder einer blattwurzelnächsten Klappe (22.1), die Anzahl der in einer auftriebsreduzierenden Betriebsposition (20I) bewegten Klappen (22.1 - 22.3) mit steigender Windgeschwindigkeit erhöht wird und/oder der Anstellwinkel um einen windgeschwindigkeitsabhängigen Betrag abgestuft oder stufenlos reduziert wird.

12. Verfahren nach einem der Ansprüche 9 bis 11, **dadurch gekennzeichnet, dass** bei Windgeschwindigkeiten oberhalb eines maximalen Windgeschwindigkeitsgrenzwerts, insbesondere einer Abschaltgeschwindigkeit der Windenergieanlage, die Auftriebsreduktionsvorrichtung (20) in die auftriebsneutrale Position (20I) bewegt wird, wobei insbesondere das Rotorblatt (2) in eine Fahnenstellung bewegt wird.

13. Verfahren nach einem der Ansprüche 9 bis 12, **dadurch gekennzeichnet, dass** die Druckwiderstandsreduktionsvorrichtung (30) an der stumpfen Hinterkante (13) des Rotorblattprofils (9) aus einer druckwiderstandsneutralen Position in eine druckwiderstandsreduzierende Betriebsposition bewegt wird, wenn die Auftriebsreduktionsvorrichtung (20) in eine auftriebsreduzierende Betriebsposition (20II) bewegt wird und/oder in die druckwiderstandsneutrale Position bewegt wird, wenn die Auftriebsreduktionsvorrichtung (20) in ihre auftriebsneutrale Position (20I) bewegt wird.

14. Betriebsführungssystem einer Windenergieanlage mit wenigstens einem Rotorblatt (2) nach einem der Ansprüche 1 bis 8, wobei das Betriebsführungssystem, insbesondere mittels eines in dem Betriebsführungssystem gespeicherten und/oder geladenen Softwareprogramms mit Programmcodemitteln, ausgebildet und eingerichtet ist, ein Verfahren nach einem der Ansprüche 9 bis 13 auszuführen.

15. Windenergieanlage mit wenigstens einem Rotorblatt (2) nach einem der Ansprüche 1 bis 8 und einem Betriebsführungssystem nach Anspruch 14.

## Claims

1. A rotor blade (2) of a wind energy installation with a longitudinal extent which extends from a rotor blade root (4) to a rotor blade tip (6), wherein the rotor blade (2) has an aerodynamic cross-sectional profile (8, 9) in at least one region of its longitudinal extent, which has a profile leading edge (10) and a profile trailing edge (12) which are connected via a suction side (14) and a pressure side (16) of the cross-sectional profile, wherein the aerodynamic cross-sectional profile (8, 9) has a region with a blunt trailing edge (13), wherein, in a region close to the blade root, at least partially in the region with the blunt trailing edge (13), a lift reduction device (20) is arranged on the suction side (14), which lift reduction device (20) is reversibly movable between a position (20I) which is neutral in terms of lift, without lift reduction, and a lift reduction operating position (20ll), wherein, in at least one region of the blunt trailing edge (13), a pressure resistance reduction device (30) is arranged, the length of which is substantially equal to from half of the height to the full height of the blunt trailing edge (13).

2. The rotor blade (2) according to claim 1, **characterised in that** the one lift reduction device (20) is constructed as a pivotable or extendable flap or as a series of two or more flaps (22.1 - 22.3) which are pivotable or extendable independently of one another and which is or are in particular made of fibre composite materials.

3. The rotor blade (2) according to claim 1 or 2, **characterised in that** the lift reduction device (20) is bonded to a surface of the suction side (14) by means of guide elements (26, 26') via an axis of rotation (24), wherein the lift reduction device (20) is movable in particular via the axis of rotation (24) by means of an actuator (28) or a mechanical system which actuator (28) or mechanical system is arranged in particular at the root (4) of the rotor blade.

4. The rotor blade (2) according to any one of the claims 1 to 3, **characterised in that** the lift reduction device (20) extends from 5% to 65%, in particular from 10% to 50%, in particular from 12% to 30%, of the blade radius and / or is arranged in the chordal direction of the cross-sectional profile (8, 9), measured from the leading edge (10), between 15% and 100%, in particular between 15% to 60% or 50% to 100%, of the chord.

5. The rotor blade (2) according to any one of the claims 1 to 4, **characterised in that** the lift reduction device (20) is arranged, in the direction of flow, behind vortex generators (29), in particular a series of vortex generators (29), which in particular have the same longitudinal extent on the rotor blade (2) as the lift reduction device (20) or a greater longitudinal extent on the rotor blade (2) than the lift reduction device (20).

6. The rotor blade (2) according to any one of the claims 1 to 5, **characterised in that** the aerodynamic cross-sectional profile (8, 9) has a relative thickness (t / c) of 29% or more, in particular of 32% or more.

7. The rotor blade (2) according to any one of the claims 1 to 6, **characterised in that** the pressure resistance reduction device (30) is constructed as a plate, in particular made of a glass-fibre reinforced plastic foam sandwich material.

8. The rotor blade (2) according to any one of the claims 1 to 7, **characterised in that** the plate is fixedly connected to the blunt trailing edge (13) of the profile (9) via a T-base or is reversibly movable from a neutral position into an actuating position.

9. A method of operating a wind energy installation with at least one rotor blade (2) according to any one of the claims 1 to 8, **characterised in that** a lift reduction is carried out in the region of the rotor blade (2) close to the blade root by moving the lift reduction device (20) into a lift-reducing operating position (20ll) at high wind speeds and / or large blade angles of attack, wherein, in addition, the blade setting angle is reduced compared to the operation which is neutral in terms of lift.

10. The method according to claim 9, **characterised in that** the lift reduction is carried out before the wind energy installation reaches an operating range with respect to the wind speed and / or the rotor blade setting angle in which a stall on the pressure side is to be expected in a region of the rotor blade tip (6).

11. The method according to claim 9 or 10, **characterised in that** the lift reduction device (20), in dependence upon the wind speed and / or the rotor blade setting angle, is moved into discrete or infinitely variable intermediate positions between the position which is neutral in terms of lift (20l) and an operating position with maximum lift reduction (2011) and / or, starting from a region which is closest to the blade root or starting from a flap (22.1) which is closest to the blade root, the number of flaps (22.1 - 22.3) moved in a lift-reducing operating position (20l) is increased with increasing wind speed and / or the angle of attack is reduced in a stepped or a continuous manner by an amount which is dependent on wind speed.

12. The method according to any one of the claims 9 to 11, **characterised in that**, at wind speeds above a maximum wind speed limit value, in particular a switch-off speed of the wind energy installation, the lift reduction device (20) is moved into the position which is neutral in terms of lift (20l), wherein in particular the rotor blade (2) is moved into a feathered position.

13. The method according to any one of the claims 9 to 12, **characterised in that**, at the blunt trailing edge (13) of the rotor blade profile (9), the pressure resistance reduction device (30) is moved from a position which is neutral in terms of pressure resistance into a pressure resistance reducing operating position, when the lift reduction device (20) is moved to a lift-reducing operating position (20II) and / or is moved to the position which is neutral in terms of pressure resistance when the lift reduction device (20) is moved to its position which is neutral in terms of lift (20I).

14. An operational management system of a wind energy installation with at least one rotor blade (2) according to any one of the claims 1 to 8, wherein the operational management system is constructed and set up, in particular by means of a software program with program code means stored and / or loaded in the operational management system, to carry out a method according to any one of the claims 9 to 13.

15. A wind energy installation with at least one rotor blade (2) according to any one of the claims 1 to 8 and an operational management system according to claim 14.

## Revendications

1. Pale de rotor (2) d'une éolienne avec une extension longitudinale, qui s'étend d'une racine de pale de rotor (4) vers une extrémité de pale de rotor (6), dans laquelle la pale de rotor (2) présente au moins dans une zone de son extension longitudinale un profil en coupe transversale aérodynamique (8, 9), qui présente une arête avant de profil (10) et une arête arrière de profil (12), qui sont reliées par le biais d'un côté aspiration (14) et d'un côté pression (16) du profil en coupe transversale, dans laquelle le profil en coupe transversale aérodynamique (8, 9) présente une zone avec une arête arrière émoussée (13), dans laquelle un dispositif de réduction de poussée (20), qui est mobile de manière réversible entre une position neutre pour la poussée (20l) sans réduction de poussée et une position de fonctionnement réduisant la poussée (20ll), est agencé dans une zone proche de la racine de pale au moins en partie dans la zone avec l'arête arrière émoussée (13) au niveau du côté aspiration (14), dans laquelle un dispositif de réduction de la résistance à la pression (30), dont la longueur est sensiblement égale à la moitié à toute la hauteur de l'arête arrière émoussée (13), est agencé au moins dans une zone de l'arête arrière émoussée (13).

2. Pale de rotor (2) selon la revendication 1, **caractérisée en ce que** l'un dispositif de réduction de poussée (20) est réalisé en tant que clapet pivotant ou déployable ou en tant que série de deux ou plusieurs clapets pivotants ou déployables indépendamment les uns des autres (22.1 - 22.3), qui est ou sont fabriqués en particulier en matériaux composites fibreux.

3. Pale de rotor (2) selon la revendication 1 ou 2, **caractérisée en ce que** le dispositif de réduction de poussée (20) est collé par le biais d'un axe de rotation (24) avec des éléments de guidage (26, 26') sur une surface du côté aspiration (14), dans laquelle le dispositif de réduction de poussée (20) est mobile en particulier par le biais de l'axe de rotation (24) au moyen d'un actionneur (28) ou d'un système mécanique, qui est agencé en particulier au niveau de la racine de pale de rotor (4).

4. Pale de rotor (2) selon l'une quelconque des revendications 1 à 3, **caractérisée en ce que** le dispositif de réduction de poussée (20) s'étend de 5 % à 65 %, en particulier de 10 % à 50 %, en particulier de 12 % à 30 %, du rayon de pale et/ou est agencé dans le sens de la corde du profil en coupe transversale (8, 9) mesuré depuis l'arête avant (10) entre 15 % et 100 %, en particulier entre 15 % à 60 % ou 50 % à 100 % de la corde.

5. Pale de rotor (2) selon l'une quelconque des revendications 1 à 4, **caractérisée en ce que** le dispositif de réduction de poussée (20) est agencé dans le sens d'écoulement derrière, en particulier d'une série de, générateurs de vortex (29), qui présentent en particulier la même extension longitudinale ou une extension longitudinale plus grande au niveau de la pale de rotor (2) que le dispositif de réduction de poussée (20).

6. Pale de rotor (2) selon l'une quelconque des revendications 1 à 5, **caractérisée en ce que** le profil en coupe transversale aérodynamique (8, 9) présente une épaisseur relative (t/c) de 29 % ou plus, en particulier de 32 % ou plus.

7. Pale de rotor (2) selon l'une quelconque des revendications 1 à 6, **caractérisée en ce que** le dispositif de réduction de la résistance à la pression (30) est réalisé en tant que plaque, en particulier en matériau sandwich GFK-mousse.

8. Pale de rotor (2) selon l'une quelconque des revendications 1 à 7, **caractérisée en ce que** la plaque est reliée par le biais d'un pied en T fermement à l'arête arrière émoussée (13) du profil (9) ou est mobile de manière réversible d'une position neutre à une position d'actionnement.

9. Procédé pour faire fonctionner une éolienne avec au moins une pale de rotor (2) selon l'une quelconque des revendications 1 à 8, **caractérisé en ce qu'**une réduction de poussée a lieu dans la zone proche de la racine de pale de la pale de rotor (2) par déplacement du dispositif de réduction de poussée (20) dans une position de fonctionnement réduisant la poussée (20ll) en cas de vitesses du vent élevées et/ou de grands angles de réglage de pale, dans lequel en plus l'angle de réglage de pale est réduit par rapport au fonctionnement neutre pour la poussée.

10. Procédé selon la revendication 9, **caractérisé en ce que** la réduction de poussée a lieu, avant que l'éolienne arrive en ce qui concerne la vitesse du vent et/ou l'angle de réglage de pale de rotor dans une zone de fonctionnement, dans laquelle un décrochage est attendu au niveau du côté pression dans une zone de l'extrémité de pâle de rotor (6).

11. Procédé selon la revendication 9 ou 10, **caractérisé en ce que** le dispositif de réduction de poussée (20) est déplacé en fonction de la vitesse du vent et/ou de l'angle de réglage de pale de rotor dans des positions intermédiaires étagées ou continues entre la position neutre pour la poussée (20l) et une position de fonctionnement réduisant la poussée au maximum (20ll) et/ou, en partant d'une section la plus proche de la racine de pale ou d'un clapet le plus proche de la racine de pale (22.1), le nombre de clapets (22.1 - 22.3) déplacés dans une position fonctionnement réduisant la poussée (20l) est augmenté avec l'augmentation de la vitesse du vent et/ou l'angle d'attaque est réduit de manière étagée ou en continu d'une valeur dépendant de la vitesse du vent.

12. Procédé selon l'une quelconque des revendications 9 à 11, **caractérisé en ce que** dans le cas de vitesses du vent supérieures à une valeur limite de vitesse du vent maximum, en particulier d'une vitesse de coupure de l'éolienne, le dispositif de réduction de poussée (20) est déplacé dans la position neutre pour la poussée (20I), dans lequel en particulier la pale de rotor (2) est déplacée dans une position de mise en drapeau.

13. Procédé selon l'une quelconque des revendications 9 à 12, **caractérisé en ce que** le dispositif de réduction de la résistance à la pression (30) au niveau de l'arête arrière émoussée (13) du profil de pale de rotor (9) est déplacé d'une position neutre pour la résistance à la pression à une position de fonctionnement réduisant la résistance à la pression, lorsque le dispositif de réduction de poussée (20) est déplacé dans une position de fonctionnement réduisant la poussée (20ll) et/ou est déplacé dans la position neutre pour la résistance à la pression, lorsque le dispositif de réduction de poussée (20) est déplacé dans sa position neutre pour la poussée (20I).

14. Système de gestion de fonctionnement d'une éolienne avec au moins une pale de rotor (2) selon l'une quelconque des revendications 1 à 8, dans lequel le système de gestion de fonctionnement est réalisé et aménagé, en particulier au moyen d'un programme logiciel chargé et/ou enregistré dans le système de gestion de fonctionnement avec des moyens de code de programme, pour effectuer un procédé selon l'une quelconque des revendications 9 à 13.

15. Éolienne avec au moins une pale de rotor (2) selon l'une quelconque des revendications 1 à 8 et un système de gestion de fonctionnement selon la revendication 14.
